Europäisches Patentamt

European Patent Office

Office européen des brevets

(19)

(11) Veröffentlichungsnummer: **0 274 096 B1**

(12) **EUROPÄISCHE PATENTSCHRIFT**

(45) Veröffentlichungstag der Patentschrift: **04.12.91**

(21) Anmeldenummer: **87118678.9**

(22) Anmeldetag: **16.12.87**

(51) Int. Cl.⁵: **B65G 39/02**, B41J 13/02, B65H 27/00

(54) **Transportwalze.**

(30) Priorität: **07.01.87 DE 8700258 U**

(43) Veröffentlichungstag der Anmeldung:
**13.07.88 Patentblatt 88/28**

(45) Bekanntmachung des Hinweises auf die
Patenterteilung:
**04.12.91 Patentblatt 91/49**

(84) Benannte Vertragsstaaten:
**AT BE CH DE ES FR GB GR IT LI LU NL SE**

(56) Entgegenhaltungen:
**US-A- 3 711 912**
**US-A- 4 287 649**

(73) Patentinhaber: **Irbit Research + Consulting
AG**
**Rue Saint Pierre 24**
**CH-1701 Fribourg(CH)**

(72) Erfinder: **Tschudin-Mahrer Rolf**
**Roemerstrasse 23**
**CH-4415 Lausen(CH)**

(74) Vertreter: **Rieder, Hans-Joachim, Dr. et al**
**Corneliusstrasse 45 Postfach 11 04 51**
**W-5600 Wuppertal 11(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine aus elastischem, offenzelligem Kunststoff bestehende Transportwalze gemäß dem Oberbegriff des Patentanspruchs 1.

Eine Transportwalze dieser Art ist durch die US-A-4 287 649 bekannt. Ihr Walzenkörper besteht aus elastischem, vorzugsweise offenzelligem Schaumstoff. Die zylindrische Mantelfläche der Transportwalze ist verhautet. Die Haut ist in den Schaumstoffporen verankert. Beide Stirnflächen der Transportwalze sind dagegen hautlos; ebenso ist die Haut nicht im Bereich der zentralen Höhlung realisiert, welche zentrale Höhlung eine Drehachse aus unelastischem Material aufnimmt. Die Haut der Transportwalze bildet Lufttaschen. Es ist nicht zweifelsfrei erkennbar, ob es sich um eine geschlossene Haut handelt. Die gebildeten Lufttaschen haben die Aufgabe, Papierstaub beim Walkprozess des Walzenkörpers abzustoßen, und zwar durch eine Art Aspiration.

Durch die US-A-3 711 912 ist dagegen eine Transportwalze bekannt, enthaltend eine zentrale Achse und einen damit verbundenen Walzenkörper, der jedoch von einem geschlossenporigen Schaumstoff (ein porenüberschreiten-des Wandern der eingeschlossenen Luft soll ausdrücklich nicht auftreten) gebildet ist, ebenso die den Walzenkörper umschließende Haut. Die Ausbildung der Haut soll dabei so sein, daß sie zu einer Versteifung des Walzenkörpers beiträgt. Sie ist relativ hart. Das beeinträchtigt die Nachgiebigkeit des Materiales insgesamt. Beim Ausführungsbeispiel gemäß Figur 5 der genannten US-A gehen die die Drehachse bildenden Achsstummel sogar direkt von Hautabschnitten aus, welche wie Stirnflansche wirken. Alternativ ist eine Metallfolie, z.B. eine Stahlfolie angesprochen. Die Achsstummel sind dort dann an die Stirnwandplatten angeschweißt.

Aufgabe der vorliegenden Erfindung ist es, eine gattungsgemäße Transportwalze in herstellungsgünstiger, gebrauchsvorteilhafter Weise so weiterzubilden, daß bei hohem Elastizitätsgrad hinsichtlich der Verschleißeigenschaften und mechanischen Belastbarkeit eine optimale Lösung vorliegt.

Gelöst ist diese Aufgabe durch die im Anspruch 1 angegebene Erfindung.

Der Unteranspruch stellt eine vorteilhafte Ausgestaltung der erfindungsgemäßen Transportwalze dar.

Zufolge solcher Ausgestaltung ist eine Transportwalze der aufgeführten Gattung erzielt, die sich durch ein günstigeres Druck-Verformungsverhalten auszeichnet, dies bei erheblich verbessertem Verschleißverhalten. Erreicht ist dies durch einen hermetisch oberflächenverschlossenen, vollständig verhauteten Walzenkörper. Dadurch ist die Transportwalze wie ein Luftkissen oder Luftreifen mit dem Schaumstoffgerüst als Füllung verschlossen. So kann keine Flüssigkeit in den Schaumstoff gelangen, was partielle Neutralisierung bedeuten würde. Die bei der Berührungsdeformation durch die Poren hindurch verlagerte Luft wird ohne Behinderung verdrängt. Endlich besteht noch ein vorteilhaftes Merkmal der Erfindung darin, daß die Verankerungstiefe der Haut in den Schaumstoffporen etwa gleich der Dicke der Haut ist. Die als geschlossene Deckschicht auftretende Haut hat je nach Einsatzgebiet, Walzendurchmesser etc.eine Dicke zwischen 0,1 und 0,3 mm. Bei derart dünnen Beschichtungen läßt das Druck-Verformungsverhalten sowie Rückstellvermögen optimal erreichen, nur verschleißfester. Es ergibt sich zufolge des partiellen elastischen Ausweichens eine größere Berührungsfläche und damit ein weit sichererer Transport; die radialen Komprimierungskräfte gehen in eine quergerichtete, praktisch nur lokale Dehnungs-Komponente über. Als rationelle Auftragsweise für die Haut erweist sich bei flüssigen Komponenten das Sprühen. Andererseits ist auch die Zuordnungsart des Gießens vorteilhaft, ferner das Aufwalzen bzw. Aufrakeln.

Der Gegenstand der Erfindung ist nachstehend anhand eines zeichnerisch veranschaulichten Ausführungsbeispieles näher erläutert. Es zeigt:

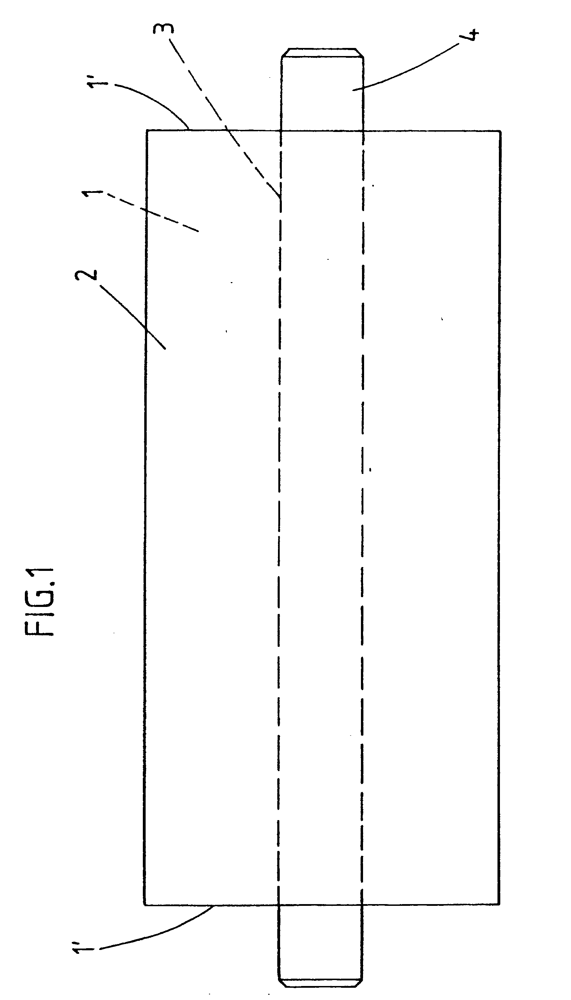

Fig. 1  die erfindungsgemäß ausgebildete Transportwalze in Seitenansicht,

Fig. 2  dieselbe in Stirnansicht,

Fig. 3  eine der Fig. 2 entsprechende Darstellung in peripherem Berührungszustand der Transportwalze und

Fig. 4  einen vergrößerten Randschnitt der Transportwalze unter Verdeutlichung der Verankerung der Haut in den peripheren Poren des offenzelligen Schaumstoffmateriales.

Die dargestellte Transportwalze besitzt einen aus offenzelligem, weichem Schaumstoff bestehenden Walzenkörper 1. Mindestens dessen Mantelfläche trägt eine Haut 2 aus nachgiebigem Material.

Bezüglich des offenzelligen Schaumstoffes ist beispielsweise auf Polyurethan der Stauchhärte von 15-30 k Pa zurückgegriffen. Auf dem Gebiet der leichten weichen Schaumstoffe bieten sich auch Ester-/Ether-Polyethylen, Silikon etc. an. Dabei ist auf eine gute Feinzelligkeit des Materiales abgestellt (ab ca. 30 PPI).

Die demgegenüber härtere, verschleißfestere Haut 2 besteht ebenfalls aus Polyurethan mit einer Shore-A-Härte von 73-83 und einer Bruchdehnung von 400%.

Bei Anwendung einer flüssigen hautbildenden Beschichtung ist bezüglich der Auftragsweise auf das Sprühen zurückgegriffen. Andererseits ist aber auch eine gießtechnische Zuordnung ebenso denkbar wie das Rakeln oder Walzen. In all diesen Fällen kann eine so hochgradige Geschlossenheit der Haut eingestellt werden, daß das Eindringen von Flüssigkeit durch den so beschichteten Walzenmantel hindurch ausgeschlossen ist. Bei entsprechendem Einsatz, wo das Eindringen von Flüssigkeit in den offenzelligen Schaumstoff des Walzenkörpers generell ausgeschlossen werden soll, empfiehlt es sich, auch die beiden kreisringförmigen Stirnflächen 1' des zylindrisch gestalteten Walzenkörpers 1 zu schließen. Einbezogen werden kann auch die zentrale Höhlung 3, welche eine Drehachse 4 aus unelastischem Material aufnimmt, die mit dem Walzenkörper 1 drehfest verbunden ist.

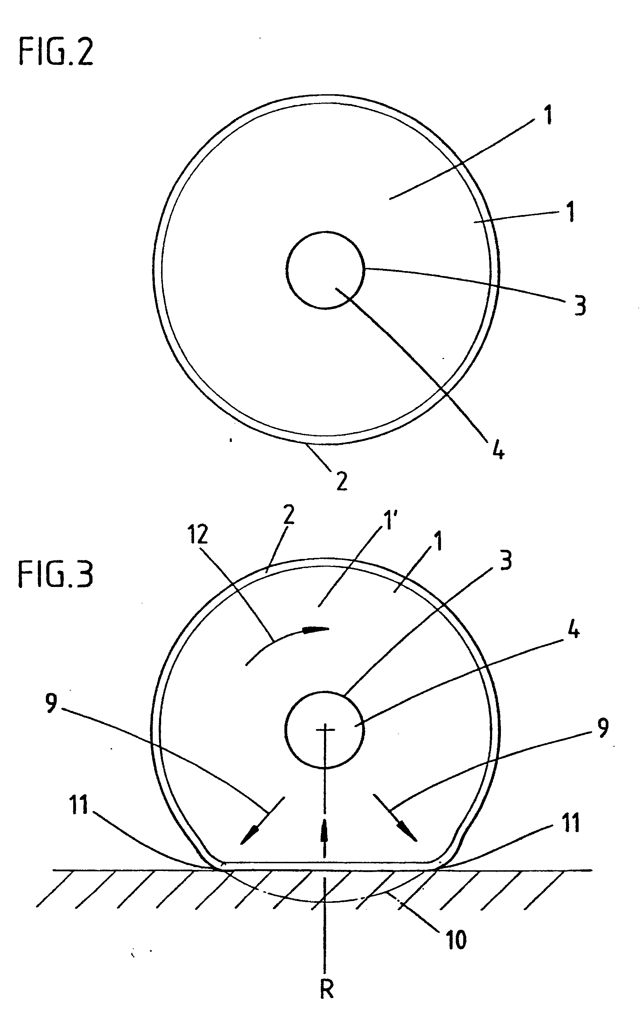

Durch eine entsprechend allseitige Beschichtung ergibt sich ein hermetischer Abschluß. Ein solcher Walzenkörper wirkt daher wie ein weich gefülltes "Kissen". Der eingeschlossene Schaumstoff fungiert als gut nachgiebige, sich stets schnell zurückstellende Füllung im Hinblick auf die Verlagerung bei Berührungsflächenanlage. Diesbezüglich wird auf die Situation in Fig. 3 verwiesen. Es liegt dann eine Elastizitäteffekt sowohl aus den entsprechenden Eigenschaften des Schaumstoffes vor wie auch ein pneumatischer Elastizitätseffekt.

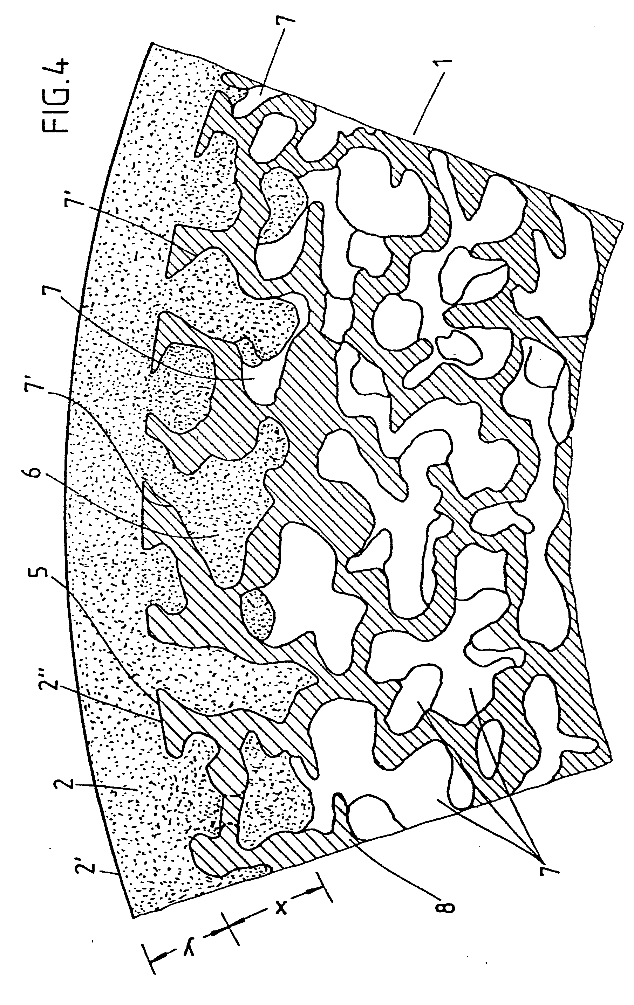

Die ohne den Einsatz von Klebern erreichbare Fixierung der Haut 2 am Walzenkörper 1 ist besonders haltbar durch Eingriff des hautbildenden Materiales in die offenzellige Schaumstoffstruktur. Dies geht augenfällig aus Fig. 4 hervor. Während die Außenfläche 2' der Haut 2 glatt gewölbt verläuft, setzt sich die den porösen Mantel 5 des Wabenkörpers 1 abdeckende Innenfläche 2" in letztere walzeneinwärts überragende Hautvorsprünge 6 fort. Diese verankern sich in den Poren 7 des Schaumstoffgerüsts 8. Die Schaumstoffporen 7 sind von unterschiedlicher Gestalt. Je nach Anschnitt weiten sie sich gerüstseitig erheblich. So entstehen Hinterschneidungsflächen 7'. Da benachbarte Poren 7 zufolge der durchgehend offenzelligen Struktur auch über Querschächte miteinander verbunden sind, ergeben sich z. T. zusammenhängende Haut-Verankerungsschlaufen. Insgesamt ist eine hochgradig stabile Verankerung der Haut 2 erzielt gegebenenfalls unterstützt noch durch eine gewisse Haftwirkung der beiden Materialien zueinander.

Die Hautdicke liegt zweckmäßig in einer Größenordnung von 0,1 bis 3,0 mm, je nach Größe der Walze und dem speziellen Einsatzzweck. Dabei ist die Verankerungstiefe x der Haut 2 in den Schaumstoffporen 8 etwa gleich der Dicke y der Haut. Zurückkommend auf das in Fig. 3 gezeigte Einsatzbild der Transportwalze erfolgt ein radial gerichtete Komprimierung unter Verdrängung eines kreisabschnittförmigen Walzenbereichs, welcher sich unter Bildung von mit Pfeil 9 bezeichneten Ausgleichskomponenten seitlich zur Radialen R verteilt. Der ideale Umfangsabschnitt der Transportwalze ist mit 10 bezeichnet. Die Ausläufer des kreisabschnittförmigen Abschnitts gehen in in je eine Auswellung 11 über, die die Berührungsfläche praktisch noch weiter vergrößern.

Der in Fig. 3 eingezeichnete Pfeil 12 gibt die Umlaufrichtung der Transportwalze an.

## Patentansprüche

1. Aus elastischem offenzelligem Schaumstoff bestehende Transportwalze mit einer sich durch Eingriff in die Schaumstoffporen (7) verankernden geschlossene Haut (2) aus nachgiebigem Material, welche Transportwalze eine in zentraler Höhlung (3) angeordnete Drehachse (4) aus unelastischem Material aufweist, gekennzeichnet durch einen hermetisch oberflächenverschlossenen, vollständig verhauteten Walzenkörper (1).

2. Transportwalze nach Anspruch 1, dadurch gekennzeichnet, daß die Verankerungstiefe (x) der Haut (2) in den Schaumstoffporen (7) etwa gleich der Dicke (y) der Haut (2) ist.

## Claims

1. Conveying roller consisting of resilient open-cell foam and having a skin (2) of flexible material sealed in an anchoring manner by meshing into the foam pores (7), which conveying roller has a rotary shaft (4) of non-resilient material arranged in a central hollow (3), characterised by a hermetically surface-sealed roller body (1) completely covered with a skin.

2. Conveying roller according to claim 1, characterised in that the depth of anchoring (x) of the skin (2) in the foam pores (7) is approximately equal to the thickness (y) of the skin (2).

## Revendications

1. Rouleau de transport constitué par une mousse élastique à cellules ouvertes comportant une peau fermée (2) qui est ancrée par pénétration dans les pores (7) de la mousse, constituée par un matériau déformable, lequel rouleau de transport présente un axe de rotation (4), en matériau non élastique, disposé dans une cavité centrale (3), caractérisé en ce qu'il comporte un corps de rouleau (1) dont la surface est hermétiquement fermée, en étant complètement revêtu d'une peau.

2. Rouleau de transport selon la revendication 1, caractérisé en ce que la profondeur d'ancrage (x) de la peau (2) dans les pores (7) de la mousse est approximativement égale à l'épaisseur (y) de la peau (2).

# FIG.1

EP 0 274 096 B1

FIG.2

FIG.3

FIG.4

EP 0 274 096 B1